Europäisches Patentamt

European Patent Office

Office européen des brevets

(19)

(11) Veröffentlichungsnummer : **0 101 527**
**B1**

(12) # EUROPÄISCHE PATENTSCHRIFT

(45) Veröffentlichungstag der Patentschrift :
28.05.86

(51) Int. Cl.⁴ : **F 16 K 31/08, H 01 F 7/16**

(21) Anmeldenummer : **82107641.1**

(22) Anmeldetag : **20.08.82**

(54) **Impulsmagnetventil mit Dauermagnethaltung ohne Änderung der Remanenz.**

(43) Veröffentlichungstag der Anmeldung :
29.02.84 Patentblatt 84/09

(45) Bekanntmachung des Hinweises auf die Patenterteilung : 28.05.86 Patentblatt 86/22

(84) Benannte Vertragsstaaten :
CH DE FR GB LI SE

(56) Entgegenhaltungen :
FR-A- 2 205 647
GB-A-   830 394
US-A- 4 000 481
US-A- 4 056 255
US-A- 4 127 835
POWER ENGINEERING, June 1978, B.W. QUAIL, WC.
CARLOS "Solenoid-operated valves for nuclear service", 66-69

(73) Patentinhaber : Bürkert GmbH
Postfach 20
D-7118 Ingelfingen (DE)

(72) Erfinder : Dettmann, Heinrich
Vogtherrstrasse 4
D-7118 Niedernhall (DE)

(74) Vertreter : Degwert, Hartmut, Dipl.-Phys. et al
Patent Attorneys Prinz, Leiser, Bunke & Partner
Ernsbergerstrasse 19
D-8000 München 60 (DE)

EP 0 101 527 B1

## Beschreibung

Die Erfindung betrifft ein Impulsmagnetventil mit Dauermagnethaltung ohne Änderung der Remanenz, bei dem ein aus mehreren Einzelmagneten bestehender Dauermagnet für das Festhalten des Ventilkörpers in mindestens einer der Schaltstellungen im äußeren Eisenkreis angebracht ist und bei welchem der innere Teil des Eisenkreises durch einen in einem stählernen Kernführungsrohr geführten beweglichen Kern und einen Stopfen gebildet ist.

Impulsmagnetventile dieser Gattung sind z. B. aus der FR-A-2 205 647 bekannt. Bei der bekannten Bauart ist der Dauermagnet zwischen zwei axial im Abstand liegenden Wicklungsteilen der Magnetspule angebracht. Es sind aber auch bereits selbsthaltende Impulsmagnetantriebe bekannt (US-A-4 000 481), bei denen der Dauermagnet in den äußeren Eisenkreis eingebracht ist, wobei er in axialer Verlängerung der Magnetspule angeordnet ist, was eine entsprechende Verlängerung der Anordnung zur Folge hat. Bei Verwendung eines solchen Impulsmagnetantriebes in einem Ventil ändert sich gegenüber einem Ventil ohne Dauermagnethaltung der Gesamtaufbau hinsichtlich der Maße, dem Bauprinzip und der Gesamtgeometrie, so daß die Einzelteile eines entsprechenden Ventils ohne Magnethaltung für das sonst gleichartige Ventil mit Magnethaltung nicht verwendbar sind.

Der Erfindung liegt die Aufgabe zugrunde, ein Impulsmagnetventil mit Dauermagnethaltung ohne Änderung der Remanenz zu schaffen, das gegenüber entsprechenden, bereits standardisierten, kompakten Magnetventilen ohne Dauermagnethaltung den Einbau des Dauermagneten in den äußeren Eisenkreis ermöglicht, ohne daß die äußeren Abmessungen und Formen des entsprechenden Magnetventils ohne Dauermagnethaltung, insbesondere der Stopfen und der Magnetkern, geändert werden müßten, so daß die wesentlichen Teile des nicht mit Dauermagnethaltung ausgerüsteten Ventils auch bei dem mit Dauermagnethaltung ausgebildeten Ventil verwendet werden können und sich die Normalausführung durch Einbau der nur geringfügige Änderungen bedingenden Dauermagnethaltung auf die Impulsausführung umstellen läßt.

Die Lösung dieser Aufgabe liegt gemäß der Erfindung darin, daß bei einem Impulsmagnetventil der eingangs genannten Gattung die als flache Plättchen ausgebildeten Einzelmagneten aus einer Seltenerd/Cobalt-Legierung bestehen, ringförmig um das Kernführungsrohr herum angeordnet, außen auf ein Ende des Kernführungsrohres aufgesetzt und in Ausschnitte der den äußeren Eisenkreis bildenden Bleche eingesetzt sind.

Durch die ringförmige Anordnung der Einzelmagnete und ihr Einsetzen in Ausschnitte der den äußeren Eisenkreis bildenden Bleche am äußeren Ende des Kernführungsrohres wird bei kleinstem Änderungsaufwand an den bei Standardventilen vorhandenen Elementen des äußeren Eisenkreises die Eingliederung des Dauermagneten in raumsparender und kostengünstiger Ausführung möglich. Diese leichte Umstellmöglichkeit erstreckt sich auch auf die Vielzahl von Ventilen, die in bekannten Magnetventilbaukastensystemen mit mehr oder weniger einheitlichen Antriebssystemen durch Kombination mit einer Vielzahl von Ventilgehäusen und unterschiedlichen Kernsystemen zusammengebaut werden.

Eine Weiterbildung der Erfindung liegt darin, daß die Einzelmagnete auf eine Polhülse aufgesetzt sind, daß die Polhülse mit den Einzelmagneten und mit einem vorzugsweise aus Kunststoff gespritzten Magnethalter unter Freilassen der Polflächen der Einzelmagnete zu einer Einheit verbunden ist und daß die so gebildete Einheit auf das eine Ende des Kernführungsrohres von außen so aufgesetzt ist, daß sie an diesem Ende des Ventilgehäuses in Aussparungen der Eisenbleche des äußeren Eisenkreises eingreift.

Die Art der Zusammenfassung der Einzelmagnete und der sie tragenden Polhülse durch eine Kunststoffeinbettung ermöglicht eine rationelle Vormontage des Dauermagnetpaketes und eine kostengünstige Einbringung dieses Paketes in das komplette Magnetsystem. Die so ausgebildeten Dauermagnete lassen sich in gleicher Weise bei Magnetventilen mit Winkelblechen als äußeren Eisenkreis und Epoxydharzumpressung verwenden wie bei Ventilen mit konventionellem Topfmagneten mit ebenem Bodenblech des äußeren Eisenkreises.

Sonstige Weiterbildungen und Einzelheiten ergeben sich aus der folgenden Beschreibung eines in der Zeichnung gezeigten Ausführungsbeispiels in Verbindung mit den Unteransprüchen.

Figur 1 ist eine Ansicht von unten der Impulsspule eines gemäß der Erfindung ausgebildeten Impulsmagnetventils, mit den Elementen des äußeren Eisenkreises und dem aufgesetzten, ringförmig ausgebildeten Dauermagnet.

Figur 2 zeigt einen Schnitt durch dieselbe Impulsspule in ihrer Kunststoff-Umpressung, in gegenüber Fig. 1 etwas kleinerem Maßstabe.

Figur 3 ist ein Schnitt durch ein unter Verwendung der Impulsspule nach Fig. 1 und 2 vervollständigtes Ventil in kleinerem Maßstabe.

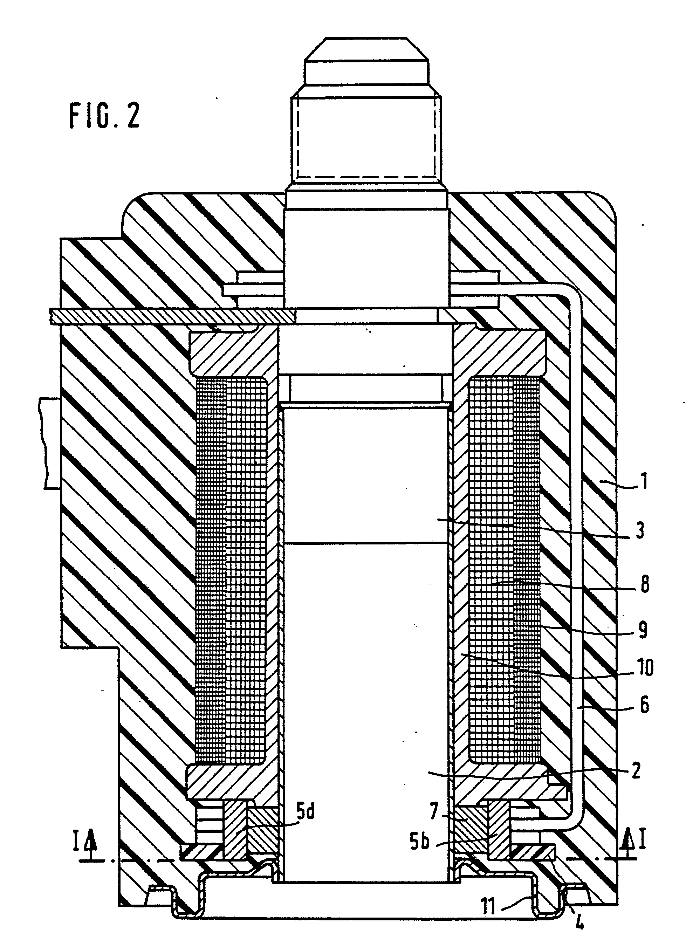

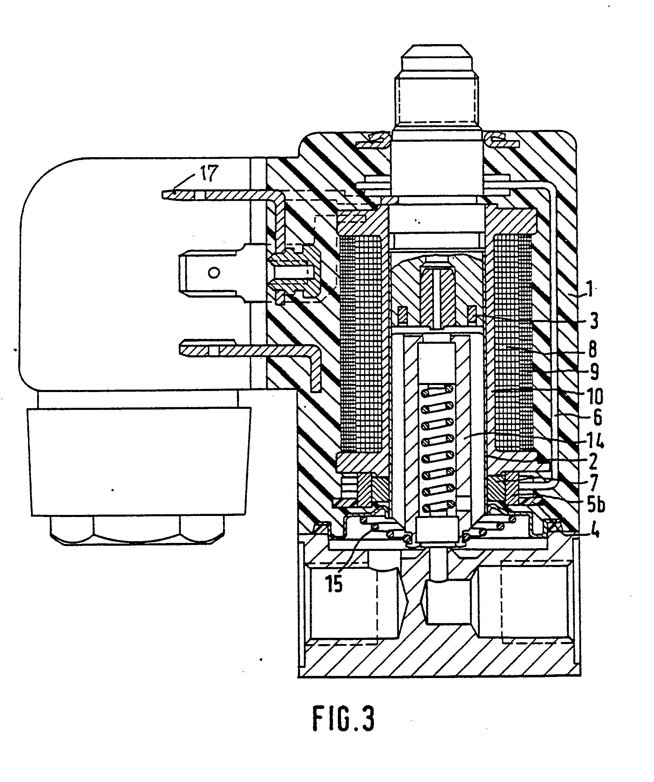

Das gezeichnete, mit einer Kunststoff-Umpressung 1 versehene Impulsmagnetventil enthält ein stählernes Kernführungsrohr 2 von bei Ventilen ohne Magnethaltung bekannter Ausführung, in dessen in Fig. 2 und 3 oberen Teil ein Stopfen 3 eingesetzt ist. Das Kernführungsrohr 2 befindet sich innerhalb eines Spulenkörpers 10, auf den die Spule mit einer Anzugswicklung 8 und einer Abfallwicklung 9 aufgesetzt ist. In dem Kernführungsrohr 2 ist ein zugleich den Magnetkern darstellender, zusammengesetzter Ventilkörper 14 geführt der in einer der Magnetwirkung entgegengesetzten Richtung durch eine Feder 15 bewegbar ist.

Auf den in Fig. 2 und 3 unteren Teil des Kernführungsrohres 2 ist der bei dem gezeichneten Beispiel in vier Einzelmagnete 5a-5d aufgeteilte Dauermagnet aufgesetzt. Die Einzelmagnete stellen rechtkantige Plättchen dar. Sie bestehen in bekannter Weise aus einer Seltenerd/Cobalt-Legierung, z. B. aus einer Samarium/Cobalt-Legierung.

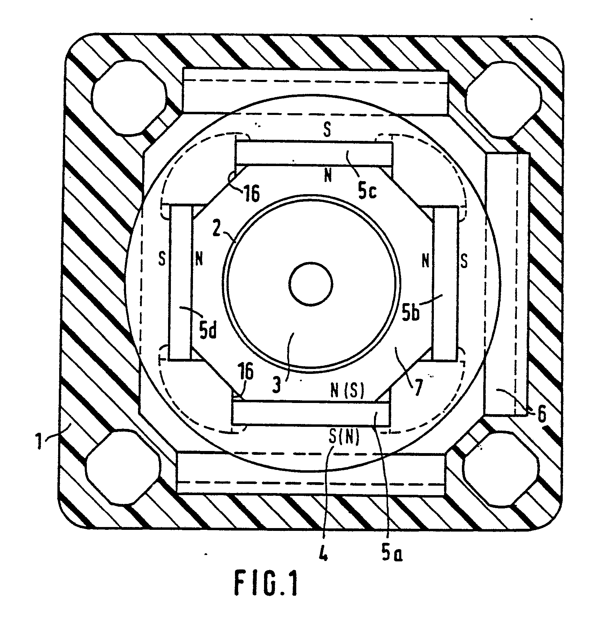

Sie sind mit gleichsinniger Polung eingesetzt, wie in Fig. 1 durch die Buchstaben N und S angedeutet ist. Statt alle N-Seiten der Plättchen nach innen und alle S-Seiten nach außen zu legen, können die Plättchen auch mit den S-Seiten nach innen und mit den N-Seiten nach außen eingesetzt sein. Das richtige Einsetzen der Plättchen bei der Montage läßt sich durch Markierungen sichern, z. B. durch Farbmarkierungen.

Die die Einzelmagnete 5a-5d darstellenden Plättchen sind an einer Polhülse 7 gehalten. Diese stellt im wesentlichen einen am Umfang achteckig abgeflachten Eisenring dar, der auf das Kernführungsrohr 2 paßt und auf dessen in Fig. 2 und 3 unteres Ende aufgeschoben ist. Die vier Einzelmagnetplättchen 5a-5d sitzen auf den abgeflachten Umfangsflächen der Polhülse 7 auf. Die Sitzflächen erstrecken sich über größere Teile des Umfanges der Polhülse als die zwischen den Sitzflächen freibleibenden, ebenfalls abgeflachten Flächen. Statt durch Abflachungen gebildeter Sitzflächen könnten an der Polhülse auch körperliche Pole in Gestalt hervorstehender Ansätze vorgesehen sein, auf welche die Dauermagnetplättchen 5a-5d aufgelegt werden würden. Die Polhülse 7 mit den Einzelmagneten 5a-5d ist bei dem gezeichneten Beispiel in einem Magnethalter 4 gehalten. Dieser stellt einen aus Kunststoff, z. B. Ultramid hergestellten Ring dar, welcher Ansätze 16 aufweist, an denen die Einzelmagnete 5a-5d mit ihren Stirnflächen anliegen. Die Einzelmagnete 5a-5d liegen mit ihren äußeren Polflächen an den äußeren Eisenkreis bildenden Magnetblechen 6 an, die an ihren in Fig. 2 und 3 unteren Enden Abbiegungen aufweisen.

Statt einen vorgefertigten Magnethalter 4 zu verwenden, in den die Polhülse 7 mit den Einzelmagneten 5a-5d eingesetzt ist, kann die Polhülse mit den Einzelmagneten auch mit Kunststoff umpreßt werden, so daß diese Umpressung den Magnethalter bildet. Das Pressen wird so vorgenommen, daß die Polflächen der Einzelmagnete 5a-5d metallisch frei bleiben, so daß sie metallischen Kontakt zu den Aussparungen der Bleche 6 des äußeren Halbkreises erhalten, in die sie eingesetzt werden. Sowohl bei der Bildung des Magnethalters 4 durch Umpressen als auch bei Verwendung eines vorgefertigten Magnethalters 4 bilden die Polhülse 7 mit den Einzelmagneten 5a-5d und der Magnethalter 4 eine bauliche Einheit, die eine vorteilhafte Montage ermöglicht. Diese Einheit wird in einer Form in die Bleche 6 des äußeren Eisenkreises eingesetzt, in denen auch die Impulsspule auf ihrem Spulenkörper 10 und mit ihrer Anzugswicklung 8 und ihrer Abfallwicklung 9 gehalten ist; diese Baugruppe wird dann durch den Stopfen 3 und das in den Magnethalter 4 einzuschiebende Kernführungsrohr 2 ergänzt, wonach die so zusammengesetzten Teile gemeinsam mit Kunststoff umpreßt werden, so daß die Kunststoffumpressung 1 entsteht. Wenn der aus Kunststoff vorgefertigte Magnethalter 4 und die Polhülse mit den Einzelmagneten als Einzelteile montiert werden, geschieht das in der Weise, daß zunächst die Bleche 6 und die Impulsspule mit ihrem Spulenkörper 10 in eine Form eingelegt werden, wonach in den Spulenkörper ein Hilfsdorn eingeführt wird, und daß der Magnethalter 4 auf den Spulenkörper 10 aufgesteckt wird, wonach die Polhülse·7 in den Magnethalter 4 eingesteckt und die vier Einzelmagnete 5a-5d eingefügt werden, wonach dann unter Entfernung des Hilfsdornes eine aus dem Stopfen 3, dem Kernführungsrohr 2 und einem Abschlußteller 11 bestehende Baugruppe eingefügt wird und das Ganze mit Kunststoff zur Bildung der Kunststoff-Umpressung 1 umpreßt wird.

Aus Fig. 3 wird für den Fachmann deutlich, daß die ihm von standardisierten Ventilen ohne Dauermagnethaltung bekannten Abmessungsverhältnisse und die bekannte Anordnung der einzelnen Elemente durch die erfindungsgemäße Anordnung eines Dauermagnetringes auf dem in Fig. 3 unteren Ende des Kernführungsrohres nicht verändert zu werden brauchen; die äußeren Abmessungen und die Gesamtgestaltung bleiben unverändert.

Bei dem beschriebenen Beispiel hat der bewegliche Ventilkörper eine einzige Schaltstellung, in der er durch den Dauermagneten gehalten wird. Bei dieser Ausführungsform ist auch die Anbringung des Dauermagneten am anderen Ende des Kernführungsrohres möglich, so daß dieser an den äußeren Eisenkreis anschließt. Diese Bauweise macht jedoch eine Änderung des Erdungsblechs 17 erforderlich. Die Erfindung ist auch bei Magnetventilen mit zwei Schaltstellungen des beweglichen Ventilkörpers verwendbar. In diesem Fall wird dann ein ringförmig ausgebildeter Dauermagnet nicht nur auf ein Ende, sondern auf jedes Ende des Kernführungsrohres 2 so aufgesetzt, daß er an die den äußeren Eisenkreis bildenden Bleche 6 anschließt.

**Patentansprüche**

1. Impulsmagnetventil mit Dauermagnethaltung ohne Änderung der Remanenz, bei dem ein aus mehreren Einzelmagneten (5a-5d) bestehender Dauermagnet für das Festhalten des Ventilkörpers (14) in mindestens einer der Schaltstellungen im Eisenkreis angebracht ist und bei welchem der innere Teil des Einsenkreises durch einen in einem stählernen Kernführungsrohr (2) geführten beweglichen Kern und einen Stopfen (3) gebildet ist, dadurch gekennzeichnet, daß die als flache Plättchen ausgebildeten Einzelmagneten (5a, 5b, 5c, 5d) aus einer Seltenerd/Cobalt-Legierung bestehen, ringförmig um das Kernführungsrohr (2) herum angeordnet, außen auf ein Ende des Kernführungsrohres (2) aufgesetzt und in Ausschnitte der den äußeren Eisenkreis bildenden Bleche (6) eingesetzt sind.

2. Ventil nach Anspruch 1, dadurch gekennzeichnet, daß die Einzelmagnete (5a bis 5d) auf eine Polhülse (7) aufgesetzt sind, daß die Polhülse (7) mit den Einzelmagneten (5a bis 5d) und mit einem vorzugsweise aus Kunststoff gespritzten Magnethalter (4) unter Freilassen der Polflächen der Einzelmagnete (5a bis 5d) zu einer Einheit verbunden ist und daß die so gebildete Einheit auf das eine Ende des Kernführungsrohres (2) von außen so aufgesetzt ist, daß sie an diesem Ende des Ventilgehäuses in Aussparungen der Eisenbleche (6) des äußeren Eisenkreises eingreift.

3. Ventil nach Anspruch 1 und 2, dadurch gekennzeichnet, daß der Dauermagnet in vier Einzelmagnete (5a bis 5d) aufgeteilt ist.

4. Ventil nach Anspruch 1 oder einem der folgenden, mit zwei Schaltstellungen des beweglichen Ventilkörpers, dadurch gekennzeichnet, daß für das magnetische Festhalten des Ventilkörpers in beiden Schaltstellungen je ein ringförmig ausgebildeter Dauermagnet auf jedes Ende des Kernführungsrohres (2) so aufgesetzt ist, daß er an die den äußeren Eisenkreis bildenden Bleche (6) anschließt.

### Claims

1. Pulsed magnetic valve with permanent magnetic latching without modification of the remanence, wherein a permanent magnet composed of a plurality of individual magnets (5a-5d) for the latching of the valve member (14) in at least one switching position is arranged in the iron circuit and wherein the inner portion of the iron circuit is formed by a movable core guided in a core guiding tube (2) made of steel and by a plug (3), characterized in that the individual magnets (5a, 5b, 5c, 5d) formed as flat small plates consist of a rare earth/cobalt alloy, are arranged in annular fashion around the core guiding tube (2), are mounted on an outer end of the core guiding tube (2) and are inserted into cutouts of the sheets (6) forming the outer iron circuit.

2. Valve according to claim 1, characterized in that the individual magnets (5a to 5d) are mounted on a pole sleeve (7), that the pole sleeve (7) forms an integral unit with the individual magnets (5a to 5d) and with a magnet holder (4) preferentially molded of plastics material, the pole surfaces being left in a bare state, and that the thus formed unit is externally mounted on one end of the core guiding tube (2) in such a manner that it engages into recesses of the iron sheets (6) of the outer iron circuit on the corresponding end of the valve housing.

3. Valve according to claims 1 and 2, characterized in that the permanent magnet is divided into four individual magnets (5a to 5d).

4. Valve according to claim 1 or any of the following, comprising two switching positions of the movable valve member, characterized in that, to provide the magnetic latching of the valve member in both switching positions, an annular permanent magnet is mounted on each of the ends of the core guiding tube (2) in a manner to be adjacent to the sheets (6) forming the outer iron circuit.

### Revendications

1. Soupape magnétique à impulsion avec verrouillage magnétique permanent sans changement d'aimantation, dans laquelle un aimant permanent constitué par plusieurs aimants individuels (5a à 5d) est, pour maintenir le corps de soupape (14) dans au moins une des positions de commutation, monté dans le circuit magnétique et dans laquelle la partie interne du circuit magnétique est constituée par un noyau mobile, guidé dans un tube de guidage (2) en acier, et par un bouchon (3), caractérisée en ce que les aimants individuels (5a, 5b, 5c, 5d) en forme de plaquettes plates sont constitués par un alliage de terres rares et de cobalt et sont disposés en forme d'anneau autour du tube de guidage (2) du noyau montés sur l'une des extrémités du tube de guidage (2) du noyau et engagés dans des échancrures des tôles (6) qui forment le circuit magnétique externe.

2. Soupape selon la revendication 1, caractérisée en ce que les aimants individuels (5a à 5d) sont montés sur une douille polaire (7), en ce que la douille polaire (7) est reliée aux aimants individuels (5a à 5d) et au support d'aimants (4) qui est de préférence recouvert de matière plastique par pulvérisation en laissant libres les surfaces polaires des aimants individuels (5a à 5d) de manière à former une unité et en ce que l'unité ainsi formée est montée de l'extérieur sur l'une des extrémités du tube de guidage (2) de telle manière qu'à cette extrémité de l'enveloppe de soupape elle s'engage dans des évidements ménagés dans les tôles de fer (6) du circuit magnétique externe.

3. Soupape selon les revendications 1 et 2, caractérisée en ce que l'aimant permanent est subdivisé en quatre aimants individuels (5a à 5d).

4. Soupape selon la revendication 1 ou l'une des revendications suivantes, qui comporte deux positions de commutation du corps mobile de soupape, caractérisée en ce que, pour la fixation magnétique du corps de soupape dans les deux positions de commutation, un aimant permanent de forme annulaire est monté sur chacune des extrémités du tube de guidage (2) de telle manière qu'il se raccorde aux tôles (6) qui forment le circuit magnétique externe.

FIG.1

FIG. 2

FIG.3